# EUROPÄISCHE PATENTSCHRIFT

(11) **EP 2 435 809 B1**
(45) Veröffentlichungstag und Bekanntmachung des Hinweises auf die Patenterteilung: **10.08.2016**
(21) Anmeldenummer: 10718521.7
(22) Anmeldetag: 16.04.2010
(51) Int. Cl.: G01L 5/00, F16C 17/20, F16C 19/52, F16C 39/06, G01M 13/04

(54) **MASCHINE UND VERFAHREN ZUR ÜBERWACHUNG DES ZUSTANDS EINES FANGLAGERS EINER MASCHINE**
MACHINE AND METHOD FOR MONITORING THE STATE OF A SAFETY BEARING OF A MACHINE
MACHINE ET PROCÉDÉ DE SURVEILLANCE DE L'ÉTAT D'UN PALIER DE SECOURS D'UNE MACHINE

(30) Priorität: 27.05.2009 DE 102009022835
(43) Veröffentlichungstag der Anmeldung: 04.04.2012
(73) Patentinhaber: Siemens Aktiengesellschaft, 80333 München (DE)
(72) Erfinder: WALTER, Hartmut, 10115 Berlin (DE); GEORGI, Jan, 97422 Schweinfurt (DE)
(86) Internationale Anmeldenummer: PCT/EP2010/055046
(87) Internationale Veröffentlichungsnummer: WO 2010/136264

(56) Entgegenhaltungen:
- WO-A1-2007/128877
- DE-B3-102006 019 873
- JP-A- 2007 187 461
- US-A- 4 982 126
- US-A- 5 602 437
- US-A- 5 677 488
- US-A- 5 810 485
- US-A- 6 100 809

## Beschreibung

Die Erfindung betrifft ein Verfahren zur Überwachung des Zustands eines Fanglagers einer Maschine. Weiterhin betrifft die Erfindung eine diesbezügliche Maschine.

Zur Lagerung der rotierenden Rotorwelle bei einer Maschine werden heutzutage immer öfter Magnetlager zur betriebsmäßigen Lagerung der Rotorwelle eingesetzt, die mit Hilfe magnetischer Felder die rotierende Rotorwelle in einem Schwebezustand halten. Bei Ausfall des Magnetlagers, z.B. infolge eines Stromausfalls, fällt die Rotorwelle in ein Fanglager und wird von diesem aufgefangen. Ein Fanglager dient solchermaßen zum Auffangen der Rotorwelle. Das Fanglager übernimmt bis zu einem vollständigen Anhalten der Rotorwelle temporär die Lagerung der Rotorwelle. Fanglager müssen zum Einen den Stoß beim Absturz der rotierenden Rotorwelle in das Fanglager aushalten und zum Anderen ein sicheres Austrudeln der Rotorwelle in dem Fanglager gewährleisten. Der Lagerring des Fanglagers weist hierzu einen im Vergleich zum Rotorwellendurchmesser geringfügig größeren Innendurchmesser auf, so dass die Rotorwelle im Normalbetrieb, d.h. bei aktivem Magnetlager, das Fanglager nicht berührt. Üblicherweise ist das Fanglager im Bereich des jeweiligen Endes der Rotorwelle im Ständergehäuse der Maschine untergebracht.

Beim Auffangen der Rotorwelle wird das Fanglager erheblichen Belastungen ausgesetzt, die zu einem Verschleiß des Fanglagers führen. Durch den Verschleiß verkürzt sich die Lebensdauer des Fanglagers, wobei im ungünstigsten Fall das Fanglager wegen des großen Verschleißes, der bereits bei einem einzelnen Auslauf der Rotorwelle im Fanglager auftreten kann, das Fanglager bereits nach einem einzigen Absturz der Welle in das Fanglager, nicht mehr für einen weiteren Absturz einsatzfähig ist. Die Fanglager sind in der Maschine eingebaut und können in der Regel, ohne Teile der Maschine zu demontieren, dort nicht inspiziert werden. Der optimale Moment zum Austausch eines defekten oder sich verschlechternden Fanglagers ist somit nicht sicher festzustellen. Bisher wurde das Problem durch das Zählen der Abstürze gelöst. Bei Überschreiten einer vordefinierten Anzahl von Abstürzen der Rotorwelle in das Fanglager, z.B. bei fünf Abstürzen, muss das Fanglager dann getauscht werden. Das Fanglager kann aber bereits nach weniger wie fünf Abstürzen verschlissen sein oder aber erheblich mehr Abstürze aushalten. Im ersten Fall kann es zum Ausfall des Fanglagers kommen, im zweiten Fall zu unnötigen und teueren Stillständen der Maschine, um noch nicht defekte oder verschlissene Fanglager zu tauschen.

Aus der US 4 982 126 A sind ein Magnetlager zum Lagern einer Rotorwelle, ein Hilfslager und ein Verfahren zum Auffangen der Rotorwelle beim Ausfall des Magnetlagers bekannt. Das Verfahren sieht das Einbringen einer Flüssigkeit in das Hilfslager vor, beispielsweise wenn die mittels eines Sensors gemessene Temperatur des Hilfslagers eine vorgegebene Temperatur übersteigt.

Es ist Aufgabe der Erfindung, eine Überwachung des Zustands eines in eine Maschine eingebauten Fanglagers zu ermöglichen.

Diese Aufgabe wird gelöst durch ein Verfahren zur Überwachung des Zustands eines Fanglagers einer Maschine, wobei vom Fanglager eine Rotorwelle der Maschine bei Ausfall eines Magnetlagers der Maschine aufgefangen wird, wobei das Fanglager einen Außenring und ein gegenüber dem Außenring rotierbar ange-ordneten Innenring aufweist, wobei zur Überwachung des Zustands des Fanglagers das Magnetlager ausgeschaltet wird, die Rotorwelle mit einem definierten Bewegungsablauf rotierend bewegt wird, die Rotorwelle hierzu entsprechend von der Maschine angetrieben wird, was von einer übergeordneten Steuerung gesteuert wird, und mittels eines Sensors eine physikalische Größe des Fanglagers gemessen wird.

Weiterhin wird diese Aufgabe gelöst durch eine Maschine, wobei die Maschine ein Magnetlager und ein Fanglager aufweist, wobei das Fanglager eine Rotorwelle der Maschine bei Ausfall des Magnetlagers auffängt, wobei das Fanglager einen Außenring und ein gegenüber dem Außenring rotierbar angeordneten Innenring aufweist, wobei zur Überwachung des Zustands des Fanglagers das Magnetlager ausschaltbar ist, wobei die Rotorwelle bei ausgeschaltetem Magnetlager mit einem definierten Bewegungsablauf rotierend bewegbar ist, die Rotorwelle hierzu entsprechend von der Maschine antreibbar ist, was von einer übergeordneten Steuerung steuerbar ist, die Maschine einen Sensor aufweist von dem eine physikalische Größe des Fanglagers messbar ist.

Die Erfindung ermöglicht den Zustand eines Fanglagers zu überwachen und zu erkennen, ob das Fanglager wegen zu starken Verschleißes ausgetauscht werden muss.

Vorteilhafte Ausbildungen der Erfindung ergeben sich aus den abhängigen Patentansprüchen.

Vorteilhafte Ausbildungen des Verfahrens ergeben sich analog zu den vorteilhaften Ausbildungen der Maschine und umgekehrt.

Es erweist sich als vorteilhaft, wenn die physikalische Größe oder eine von der physikalischen Größe abgeleitete Größe mit einer Sollgröße verglichen wird und falls die Abweichung der physikalischen Größe oder der abgeleiteten Größe von der Sollgröße einen Grenzwert überschreitet eine Warnmeldung erzeugt wird. Hierdurch wird das automatische Erkennen eines verschlissenen Fanglagers ermöglicht und z.B. ein Bediener der Maschine oder Wartungspersonal automatisch informiert, wenn das Fanglager verschlissen ist.

Ferner erweist es sich als vorteilhaft, wenn zum Befestigen des Fanglagers in der Maschine um den Außenring ein Fanglagerträger angeordnet ist, wobei der Sensor an der dem Fanglagerträger zugewandten Seite des Außenrings angeordnet ist. An dieser Stelle lässt sich die physikalische Größe besonders gut messen.

Ferner erweist es sich als vorteilhaft, wenn die physikalische Größe in Form der Temperatur des Fanglagers oder in Form einer zwischen Außenring und dem Fanglagerträger auftretenden Kraft oder in Form von Schwingungen des Fanglagers oder in Form eines zwischen Außenring und dem Fanglagerträger auftretenden Drucks vorliegt. Temperatur, Kraft, Druck oder Schwingungen stellen übliche physikalische Größen eines Fanglagers dar, die sich mit zunehmendem Verschleiß des Fanglagers ändern.

Ferner erweist es sich als vorteilhaft, wenn der Sensor zwischen Außenring und Fanglagerträger angeordnet ist, da dann die vom Fanglager auf den Fanglagerträger übertragene Kraft besonders gut ermittelt werden kann.

Weiterhin erweist es sich als vorteilhaft, wenn der Sensor flach ausgebildet und in eine Folie eingebettet oder auf einer Folie angeordnet ist, da dann der Sensor auf besonders einfache Art und Weise in die Maschine eingebaut werden kann.

Ferner erweist es sich als vorteilhaft, wenn zum Befestigen des Fanglagers in der Maschine um den Außenring ein Fanglagerträger angeordnet ist, wobei der Außenring an seiner dem Fanglagerträger zugewanden Seite eine Aussparung aufweist in der zumindest ein Teil des Sensors angeordnet ist. In der Aussparung kann der Sensor auf besonders einfache Art und Weise angeordnet werden.

Weiterhin erweist es sich als vorteilhaft, wenn die physikalische Größe in Form des Abstands zwischen Außenring und Innenring vorliegt. Der Abstand zwischen Außenring und Innenring stellt eine übliche physikalische Größe eines Fanglagers dar, die sich mit zunehmendem Verschleiß des Fanglagers ändert.

In diesem Zusammenhang erweist es sich als vorteilhaft, wenn zumindest Teil des Sensors im Inneren des Außenrings angeordnet ist. Im Inneren des Außenrings kann der Sensor auf besonders einfache Art und Weise angeordnet werden.

Ferner erweist es sich als vorteilhaft, wenn zwischen Außenring und Innenring Wälzkörper angeordnet sind oder wenn der Innenring direkt im Außenring gleitet. Diese Ausbildungen stellen übliche Ausbildungen des Fanglagers dar.

Weiterhin erweist es sich als vorteilhaft, wenn die physikalische Größe über eine Datenverbindung an einen von der Maschine entfernt angeordneten Rechner übertragen wird. Hierdurch wird eine Fernüberwachung des Fanglagers ermöglicht.

Ferner erweist es sich als vorteilhaft, wenn die physikalische Größe mit einer Sollgröße oder mit einer von der physikalischen Größe abgeleiteten Größe vergleichbar ist und falls die Abweichung der physikalischen Größe oder der abgeleiteten Größe von der Sollgröße einen Grenzwert überschreitet eine Warnmeldung erzeugbar ist. Hierdurch wird das automatische Erkennen eines verschlissenen Fanglagers ermöglicht und z.B. ein Bediener der Maschine oder Wartungspersonal automatisch informiert, wenn das Fanglager verschlissen ist.

Die Maschine kann z.B. als Elektromotor oder Generator oder Kompressor oder Verdichter oder als Turbine ausgebildet sein. Die Maschine kann insbesondere als Windkraftgenerator ausgebildet sein.

Ausführungsbeispiele der Erfindung sind in der Zeichnung dargestellt und werden im Folgenden näher erläutert. Dabei zeigen:
- FIG 1: eine schematisierte Darstellung einer erfindungsgemäßen Maschine mit einem Fanglager,
- FIG 2: eine Schnittansicht des Fanglagers und des Lagerträgers im Rahmen eines Ausführungsbeispiels der Erfindung,
- FIG 3: eine Schnittansicht des Fanglagers und des Lagerträgers im Rahmen eines weiteren Ausführungsbeispiels der Erfindung,
- FIG 4: ein Fanglager und ein Fanglagerträger im Rahmen eines weiteren Ausführungsbeispiels der Erfindung,
- FIG 5: ein Ablaufdiagramm des erfindungsgemäßen Verfahrens,
- FIG 6: eine erste Ausbildung der Sensorfolie,
- FIG 7: eine zweite Ausbildung der Sensorfolie,
- FIG 8: ein Fanglager und ein Fanglagerträger im Rahmen eines weiteren Ausführungsbeispiels der Erfindung und
- FIG 9: eine schematisierte Darstellung einer Ansteuerung der Maschine.

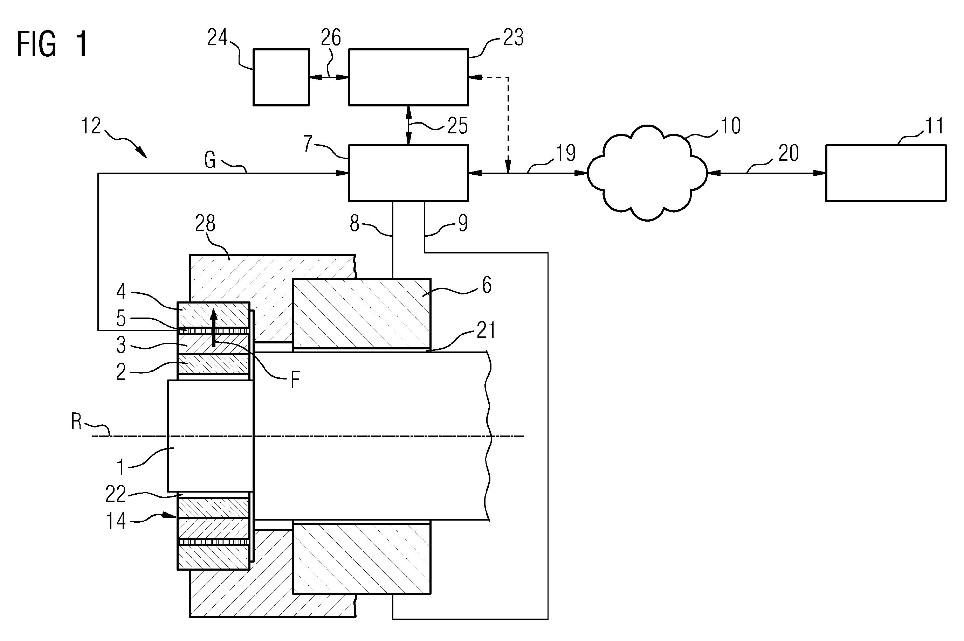

In FIG 1 sind in Form einer schematisierten Darstellung, die für das Verständnis der Erfindung wesentlichen Elemente einer Maschine 12 dargestellt, die im Rahmen des Ausführungsbeispiels als Elektromotor ausgebildet ist. Andere Elemente der Maschine, wie z.B. Läuferjoch etc. sind der Übersichtlichkeit halber und da zum Verständnis der Erfindung unwesentlich nicht in FIG 1 dargestellt. Die Maschine 12 weist eine rotierbar angeordnete, mittels eines Magnetlagers 6 gelagerte Rotorwelle 1 auf, die im Betrieb der Maschine 12 um eine Rotationsachse R rotiert.

Ein Magnetlager 6 hält die Rotorwelle 1, mittels eines geregelten Magnetfelds, in einem Luftspalt 21 in Schwebe. Das Magnetlager weist hiezu als wesentliche Elemente Spulen zur Erzeugung des Magnetfelds auf.

Neben dem Magnetlager 6 weist die Maschine 12 ein Fanglager 14 auf, das bei einem Ausfall des Magnetlagers 6 die Rotorwelle 1 auffängt, wenn diese in das Fanglager 14 fällt und die Lagerung der Rotorwelle 1 bis zum Stillstand der Rotorwelle 1 übernimmt. Ein solcher Ausfall des Magnetlagers 6 kann z.B. bei einem Ausfall der Stromversorgung der Maschine 12 und damit des Magnetlagers 6 auftreten.

Das Fanglager 14 weist einen Außenring 3 und einen gegenüber dem Außenring 3 rotierbar angeordneten Innenring 2 auf. Zum Befestigen des Fanglagers 14 in der Maschine 12 ist um den Außenring 3 ein Fanglagerträger 4 angeordnet, wobei im Rahmen des Ausführungsbeispiels der Fanglagerträger 4 ringförmig ausgebildet ist und um die Außenseite des Außenrings 3 angeordnet ist. Zur Befestigung des Fanglagers 14 wird das Fanglager 14 in den Fanglagerträger 4 eingeführt.

Weiterhin weist die Maschine 12 ein ruhendes Maschinengehäuse 28 auf, an das der Fanglagerträger 4 befestigt ist, wobei die Befestigung zwischen Fanglagerträger 4 und dem Maschinengehäuse 28 der Übersichtlichkeit halber in FIG 1 nicht dargestellt ist.

Zwischen dem Innenring 2 und der Rotorwelle 1 ist ein Luftspalt 22 angeordnet, der etwas breiter ist als der Luftspalt 21. Bei einem angeschalteten und ordnungsgemäß funktionierenden Magnetlager 6 hat der Innenring 2 des Fanglagers 14 somit keine Berührung mit der Rotorwelle 1. Bei einem Versagen des Magnetlagers 6, z.B. infolge eines Stromausfalls, fällt die Rotorwelle 1 in das Fanglager 14 hinein und es kommt zu einem mechanischen Kontakt zwischen dem Innenring 2 und der im Betrieb der Maschine 12 rotierenden, insbesondere schnell rotierenden Rotorwelle 1, was oftmals zu einem schnellen Verschleiß des Fanglagers 14 führt.

Zur Steuerung und Regelung des Magnetlagers 6 weist die Maschine 12 eine Steuereinrichtung 7 auf, die über elektrische Leitungen 8 und elektrische Leitungen 9, die im Rahmen der schematisierten Darstellung in FIG 1 als Striche dargestellt sind, mit dem Magnetlager 6 verbunden ist. Die Steuereinrichtung 7 regelt das vom Magnetlager 6 erzeugte Magnetfeld derart, dass die Rotorwelle 1 im Luftspalt 21 vom Magnetfeld in Schwebe gehalten wird. Die Steuereinrichtung 7 enthält die hiezu notwendigen Steuerungs- und Regelungsfunktionalitäten. Weiterhin enthält die die Steuereinrichtung 7 Stromrichter zur Ansteuerung des Magnetlagers 6. Die zur Messung des Abstands zwischen Magnetlager 6 und Rotorwelle 1 für die Regelung des Magnetfelds notwendigen Messeinrichtungen und Rückführzweige zur Steuereinrichtung 7 sind der Übersichtlichkeit halber und da zum Verständnis der Erfindung unwesentlich in FIG 1 nicht dargestellt.

Erfindungsgemäß weist die Maschine 12 einen Sensor 5 auf, der eine physikalische Größe G des Fanglagers misst. Die gemessene physikalische Größe G wird dabei im Rahmen des Ausführungsbeispiels von der Steuereinrichtung 7 eingelesen. Die physikalische Größe kann z.B. in Form der Temperatur des Fanglagers oder in Form einer zwischen dem Außenring 3 des Fanglagers 14 und dem Fanglagerträger 4 auftretenden Kraft F oder in Form von Schwingungen des Fanglagers oder in Form eines zwischen Außenring und dem Fanglagerträger auftretenden Drucks oder in Form des Abstands zwischen Außenring und Innenring vorliegen. Solchermaßen kann der Sensor z.B. als Temperatursensor zur Messung der Temperatur des Fanglagers oder als Kraftsensor zur Messung der zwischen Außenring und Fanglagerträger auftretenden Kraft F oder als Schwingungssensor zur Messung von Schwingungen des Fanglagers oder als Drucksensor zur Messung des zwischen Außenring und Fanglagerträger auftretenden Drucks oder als Wegsensor zur Messung des Abstands zwischen Außenring und Innenring vorliegen. Im Rahmen des Ausführungsbeispiels gemäß FIG 1 ist der Sensor 5 dabei als Kraftsensor ausgebildet und misst die zwischen Außenring 3 und dem Fanglagerträger 4 auftretende Kraft F. Der Sensor 5 ist zwischen Fanglagerträger 4 und Außenring 3 angeordnet. Der Sensor 5 ist solchermaßen im Kraftfluss des Fanglagers 14 zum Fanglagerträger 4 angeordnet.

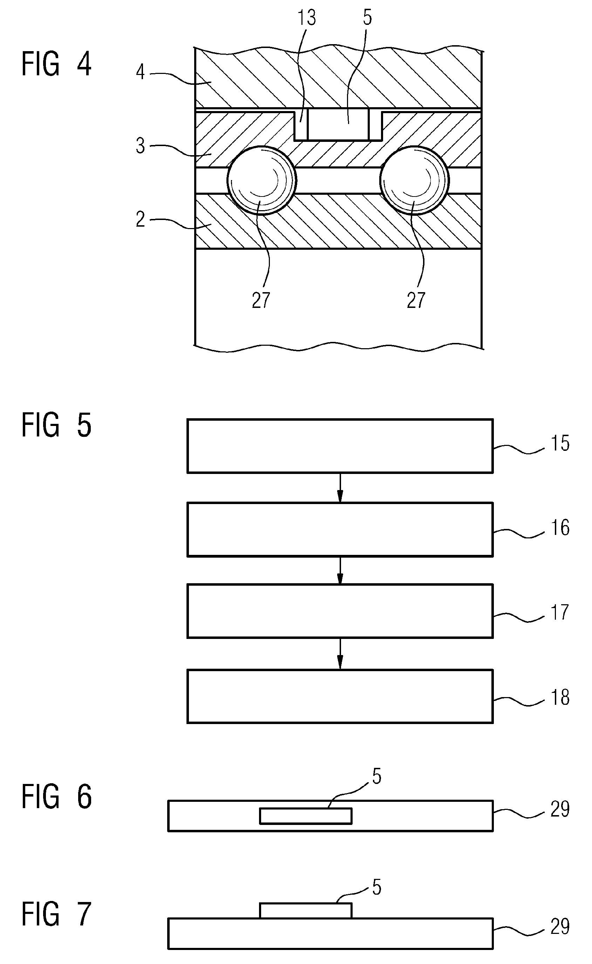

Im Rahmen des Ausführungsbeispiels gemäß FIG 1 ist dabei, wie in FIG 6 und FIG 7 dargestellt, der Sensor 5 flach ausgebildet und in eine Folie 29 eingebettet (siehe FIG 6) oder auf einer Folie (siehe FIG 7) angeordnet. Der Sensor 5 bildet solchermaßen zusammen mit der Folie 29 eine sogenannte Sensorfolie. Der Sensor 5 misst im Rahmen des Ausführungsbeispiels die Kraft F. Die Sensorfolie ist dabei in der Darstellung gemäß FIG 1 der Übersichtlichkeit halber nicht maßstabgetreu, sondern wesentlich dicker gegenüber der Realität dargestellt. Die gemessene Kraft F wird dann, wie schon oben beschrieben, im Rahmen des Ausführungsbeispiels von der Steuereinrichtung 7 eingelesen. Die Sensorfolie könnte aber auch, bei entsprechender Ausbildung des Sensors, z.B. die Temperatur, die Schwingungen oder den Druck messen, wobei auch unterschiedliche Sensoren zur Messung unterschiedlicher physikalischer Größen (z.B. Temperatursensor und Kraftsensor) in eine gemeinsame Folie eingebettet oder auf einer gemeinsamen Folie angeordnet sein können.

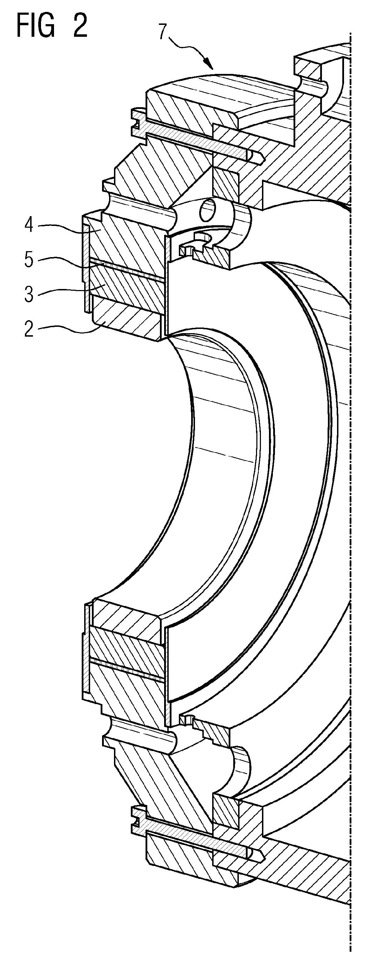

In FIG 2 ist eine Schnittansicht des Fanglagers und des Lagerträgers 4 dargestellt, wobei in FIG 2 gleiche Elemente mit den gleichen Bezugszeichen versehen sind wie in FIG 1. Bei der Ausbildung der Erfindung gemäß FIG 1 und FIG 2 gleitet der Innenring 2 direkt im Außenring 3. Das Fanglager ist solchermaßen als Gleitlager ausgebildet.

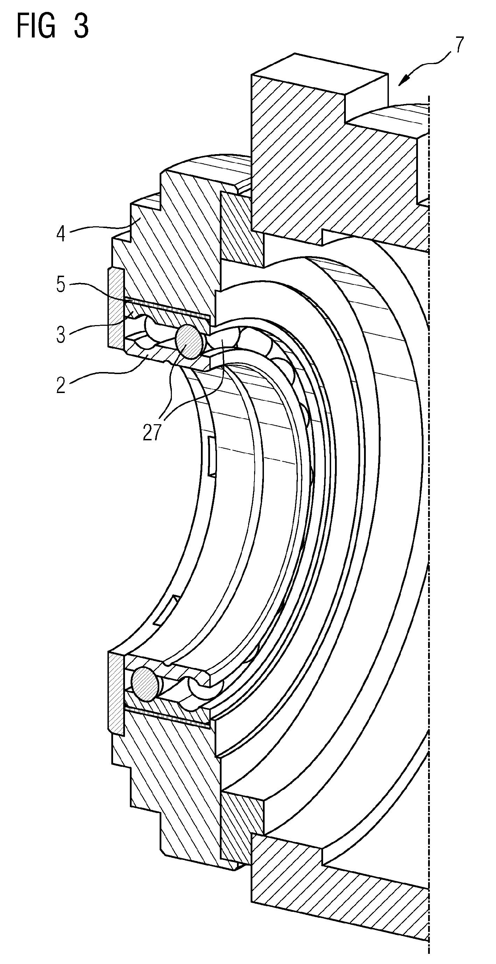

Die in FIG 3 dargestellte Ausführungsform entspricht im Grundaufbau im Wesentlichen der vorstehend in FIG 1 und FIG 2 beschriebenen Ausführungsform. Gleiche Elemente sind daher in FIG 3 mit den gleichen Bezugszeichen versehen wie in FIG 1 und FIG 2. Der einzige wesentliche Unterschied besteht darin, dass bei der Ausführungsform gemäß FIG 3 zwischen Außenring 3 und Innenring 2 Wälzkörper 27 angeordnet sind, die im Rahmen des Ausführungsbeispiels in Form von Kugeln ausgebildet sind. Im Rahmen des Ausführungsbeispiels gemäß FIG 3 ist das Fanglager solchermaßen als Wälzlager ausgebildet.

In FIG 4 ist im Rahmen einer schematisierten Darstellung eine weitere Ausführungsform der Erfindung dargestellt, die im Wesentlichen der Ausführungsform gemäß FIG 3 entspricht, wobei gleiche Elemente mit den gleichen Bezugszeichen versehen sind wie in FIG 3. Der einzige wesentliche Unterschied gegenüber der Ausführungsform gemäß FIG 3 besteht darin, dass der Sensor 5 nicht in Form einer Sensorfolie ausgebildet ist, sondern als konventioneller Kraftsensor. An seiner dem Fanglagerträger 4 zugewandten Seite weist der Außenring 3 eine Aussparung 13 auf, in der zumindest ein Teil des Sensors 5 angeordnet ist. Der Sensor 5 ist dabei an seiner Oberseite am Fanglagerträger 4 und an seiner Unterseite am Außenring 3 angeordnet. Solchermaßen ist der Sensor 5 zwischen Außenring 3 und Fanglagerträger 4 angeordnet und misst die zwischen Außenring und dem Fanglagerträger 4 auftretende Kraft F. Der Sensor 5 kann aber z.B. auch als Temperatursensor zur Messung der Temperatur des Fanglagers oder als Schwingungssensor zur Messung von Schwingungen des Fanglagers ausgebildet sein oder als Drucksensor zur Messung des zwischen Außenring und Fanglagerträger auftretenden Drucks vorliegen. Bei einer Ausbildung des Sensors 5 als Temperatursensor oder als Schwingungssensor ist der Sensor 5 vorzugsweise vollständig in der Aussparung 13 angeordnet, d.h. er steht nicht über die Aussparung 5 hinaus, wie in FIG 4 gezeichnet. Es sei dabei angemerkt, dass selbstverständlich aber auch bei dieser Ausführungsform der Sensor als Sensorfolie ausgebildet sein kann, wobei zumindest ein Teil des Sensors der Sensorfolie oder die Sensorfolie vollständig in der Aussparung 13 angeordnet sein kann.

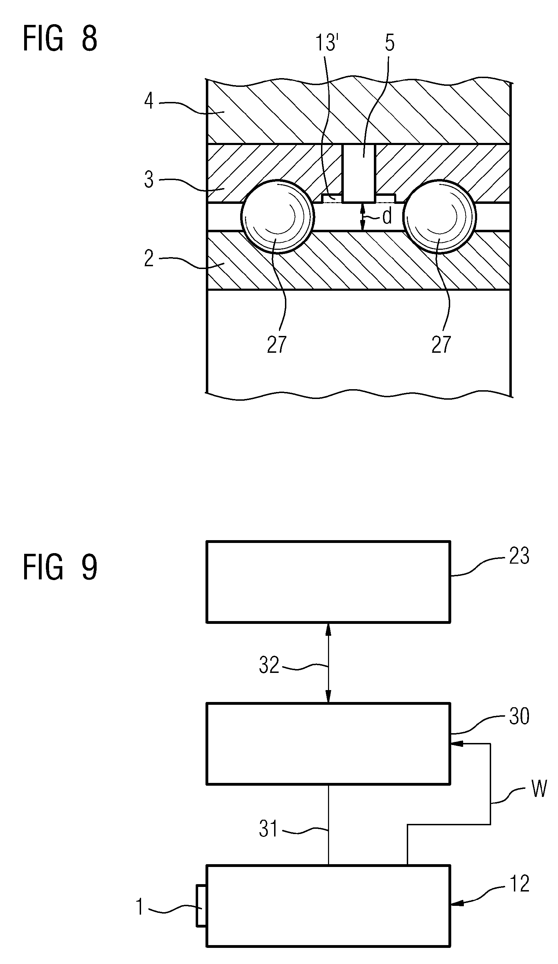

In FIG 8 ist im Rahmen einer schematisierten Darstellung eine weitere Ausführungsform der Erfindung dargestellt, die im Wesentlichen der Ausführungsform gemäß FIG 3 entspricht, wobei gleiche Elemente mit den gleichen Bezugszeichen versehen sind wie in FIG 3. Der einzige wesentliche Unterschied gegenüber der Ausführungsform gemäß FIG 3 besteht darin, dass der Sensor 5 nicht in Form einer Sensorfolie ausgebildet ist, sondern als konventioneller Wegsensor zur Messung des Abstands d zwischen Außenring 3 und Innenring 2. Der Außenring 3 weist im Rahmen dieses Ausführungsbeispiels an seiner Innenseite eine Aussparung 13' auf, wobei im Rahmen des Ausführungsbeispiel ein Teil des Sensor 5 in der Aussparung 13' angeordnet ist und ein Teil des Sensors 5 im Inneren des Außenrings 3 angeordnet ist. Der Sensor 5 kann jedoch auch vollständig im Inneren des Außenrings 3 angeordnet sein. Der im Rahmen dieses Ausführungsbeispiels als Wegsensor ausgebildete Sensor 5 kann jedoch auch an einer anderen Stelle angeordnet sein.

Die Leitungen, die zur Übertragung der physikalischen Größe vom Sensor 5 wegführen, werden vorzugsweise durch den Fanglagerträger 4 hindurchgeführt, was der Übersichtlichkeit halber in den Figuren nicht dargestellt ist. Selbstverständlich kann auch bei einer Ausbildung des Fanglagers als Gleitlager gemäß FIG 1 und FIG 2 der Außenring 3 analog zur Ausführungsform der Erfindung gemäß FIG 4 und FIG 8 eine Aussparung aufweisen, in der zumindest ein Teil des Sensors 5 oder der Sensor 5 vollständig angeordnet ist.

In FIG 5 ist das erfindungsgemäße Verfahren zur Überwachung des Zustands des Fanglagers in Form eines Ablaufdiagramms dargestellt. Dabei wird bei der Durchführung des Verfahrens in einem ersten Schritt 15 das Magnetlager 6 ausgeschaltet, danach in einem zweiten Schritt 16 die Rotorwelle 1 mit einem definierten Bewegungsablauf rotierend bewegt, wobei mittels des Sensors 5 eine physikalische Größe G des Fanglagers 14 gemessen und gespeichert wird, wonach in einem dritten Schritt 17 die gemessene physikalische Größe mit einer Sollgröße verglichen und gegebenenfalls in einem vierten Schritt 18 eine Warnmeldung erzeugt wird, falls die Abweichung der gemessenen physikalischen Größe G von der Sollgröße einen Grenzwert überschreitet. Die Durchführung des Verfahrens wird im Folgenden näher erläutert. In einem ersten Schritt 15 wird das Magnetlager 6 vorzugsweise bei stillstehender Rotorwelle 1 ausgeschaltet. Das Ausschalten des Magnetlagers 6 wird im Rahmen des Ausführungsbeispiels von der Steuereinrichtung 7 durchgeführt. Daraufhin fällt die Rotorwelle 1 in das Fanglager 14 und wird von diesem aufgefangen. Anschließend wird in einem Schritt 16 die Rotorwelle 1 mit einem definierten Bewegungsablauf rotierend bewegt. Ein solcher definierter Bewegungsablauf kann z.B. darin bestehen, dass die Rotorwelle 1 langsam mit einer vorgegebenen konstanten Drehzahl über einen bestimmten Zeitraum im Fanglager 14 rotiert. Die Rotorwelle wird hierzu entsprechend von der Maschine 12 angetrieben, was von einer übergeordneten Steuerung 23 (siehe FIG 1 und FIG 9), die z.B. in Form der numerischen Steuerung der Maschine 12 ausgebildet sein kann, gesteuert wird. Die übergeordnete Steuerung 23 steuert hierzu, wie schematisiert in FIG 9 dargestellt, über eine Antriebseinrichtung 30, die eine Regeleinrichtung und einen zu Energieversorgung der Maschine 12 benötigen Stromrichter umfasst, die im Rahmen des Ausführungsbeispiels als Elektromotor ausgebildete Maschine 1, an. Die Antriebseinrichtung 30 ist über elektrische Leitungen 31, die schematisiert in Form eines Strichs dargestellt sind, mit der Maschine 1 verbunden. Zur Regelung der Drehzahl der Rotorwelle 1 wird der Antriebseinrichtung 30 von einer in die Maschine 12 integrierten Messeinrichtung der Drehwinkel W der Rotorwelle 1 übermittelt. Die Drehzahl mit der sich die die Rotorwelle 1 drehen soll, wird dabei dem Antriebsgerät 30 von der übergeordneten Steuerung 23 über eine Datenverbindung 32 (z.B. Datenbus) vorgegeben.

Während der Durchführung des definierten Bewegungsablaufs wird im Schritt 16 (siehe FIG 5) eine physikalische Größe, wie z.B. die Temperatur des Fanglagers oder die zwischen Außenring und dem Fanglagerträger auftretende Kraft F oder die Schwingungen des Fanglagers oder der zwischen Außenring und dem Fanglagerträger auftretende Druck oder der Abstand zwischen Außenring und Innenring gemessen und gespeichert, wobei die Speicherung der physikalischen Größe vorzugsweise in der Steuereinrichtung 7 erfolgt.

Die gemessene physikalische Größe kann anschließend z.B. von einem Bediener vor Ort an der Maschine ausgelesen und ausgewertet werden. Der zeitliche Verlauf der physikalischen Größe kann hierzu z.B. in Form eines Diagramms auf einer Bedieneinrichtung 24 der Maschine dargestellt werden. Die Bedieneinrichtung 24 ist hierzu über die übergeordnete Steuerung 23 mit der Steuereinrichtung 7 zur Übertragung von Daten verbunden, was durch die Pfeile 25 und 26 dargestellt ist. Die physikalische Größe, die in Form von zeitlich aufeinanderfolgenden Messwerten vorliegt, wird von der Steuereinrichtung 7 an die Bedieneinrichtung 24 übermittelt und dort von einem Bediener ausgewertet. Der Sensor übermittelt hierzu, vorzugsweise in konstanten Zeitintervallen, die Messwerte an die Steuereinrichtung 7.

Alternativ oder zusätzlich hierzu ist im Rahmen des Ausführungsbeispiels die Steuereinrichtung 7 über das Internet 10 und/oder z.B. über ein Bussystem mit einem von der Maschine 12 entfernt angeordneten Rechner 11 zur Übertragung von Daten verbunden, was durch zwei Pfeile 19 und 20 in FIG 1 dargestellt ist. Das Internet oder ein Bussystem sind dabei Beispiele für typische Datenverbindungen. Die physikalische Größe, d.h. genauer ausgedrückt die Messwerte, können hierzu von der Steuereinrichtung 7 an den Rechner 11 übertragen werden und dort z.B. von Wartungspersonal ausgewertet werden. Alternativ, anstatt direkt die Daten von der Steuereinrichtung 7 über das Internet 10 an den Rechner 11 zu übermitteln, können diese auch zunächst über die Verbindung 25 von der Steuereinrichtung 7 an die übergeordnete Steuerung 23 übermittelt werden und von dort über z.B. das Internet 10, an den Rechner 11 übertragen werden, was in FIG 1 mittels eines gestrichelt gezeichneten Pfeils dargestellt ist.

Zusätzlich kann jedoch auch eine automatische Auswertung der gemessenen physikalischen Größe in der Steuereinrichtung 7, oder in der übergeordneten Steuerung 23 oder im Rechner 11 durchgeführt werden. Hierzu wird in einen Schritt 17 die gemessene physikalische Größe, die in Form von zeitlich aufeinanderfolgenden Messwerten vorliegt, mit einer Sollgröße verglichen und falls die Abweichung von gemessener physikalischer Größe und Sollgröße einen Grenzwert überschreitet, wird in einem Schritt 18 eine Warnmeldung erzeugt. Die physikalische Größe liegt hierbei in der Regel, wie schon beschrieben, in Form von zeitlich aufeinanderfolgenden gemessenen Messwerten vor. Die Sollgröße kann z.B. ermittelt werden, indem bei einem neu eingebauten Fanglager bei ausgeschaltetem Magnetlager die Rotorwelle 1 mit dem definiertem Bewegungsablauf rotierend bewegt wird und hierbei die physikalische Größe gemessen und als Sollgröße abgespeichert wird. Die Sollgröße liegt somit in der Regel in Form von zeitlich aufeinanderfolgenden, vorzugsweise durch einmalige Messung, ermittelten Sollwerten vor.

Falls die Abweichung von gemessener physikalischer Größe und Sollgröße einen Grenzwert überschreitet, wird in einem Schritt 18, je nach dem, wo die Auswertung realisiert ist, von der übergeordneten Steuerung 23 oder der Steuereinrichtung 7 oder dem Rechner 11 eine Warnmeldung erzeugt. Die Abweichung kann z.B. bestimmt werden indem der Betrag der Differenz der Messwerte zu den Sollwerten ermittelt wird. Durch die Warnmeldung wird dem Bediener vor Ort und/oder von der Maschine entferntes Wartungspersonal ein stark verschlissenes Fanglager, das ausgetauscht werden muss, gemeldet. Die gemessene physikalische Größe und die Sollgröße liegen dabei, wie schon gesagt, in der Regel in Form von zeitlichen Verläufen vor. Der Verschleiß eines Fanglagers wirkt sich im Allgemeinen z.B. dahingehend aus, dass während dem definierten Bewegungsablauf die Temperatur des Fanglagers schneller ansteigt und/oder höhere Temperaturwerte erreicht werden, als bei einem unverschlissenen Fanglager. Weiterhin sind in der Regel bei einem verschlissenen Fanglager gegenüber einem unverschlissenen Fanglager, bei Durchführung des definierten Bewegungsablaufs, die gemessene Kraft und der gemessene Druck, welche zwischen Außenring des Fanglagers und dem Fanglagerträger auftritt und/oder der Abstand zwischen Außenring und Innenring, verändert und/oder es treten ungewöhnliche oder stärkere Schwingungen des Fanglagers auf. Im Rahmen des Ausführungsbeispiels wird dabei als physikalische Größe die vom Sensor 5 gemessene Kraft F wie oben beschrieben ausgewertet und gegebenenfalls eine Warnmeldung erzeugt.

Es sei an dieser Stelle angemerkt, dass selbstverständlich zur Messung der physikalischen Größe die Maschine nicht nur einen einzelnen, sondern auch mehrere Sensoren, die die physikalische Größe z.B. an unterschiedlichen Stellen und/oder in unterschiedliche Richtungen (z.B. im Falle einer Kraft oder Schwingungen) messen, aufweisen kann. Die Auswertung kann dann z.B. für jedes Messsignal der Sensoren separat erfolgen.

Weiterhin sei an dieser Stelle angemerkt, dass die zwischen Außenring 3 und dem Fanglagerträger auftretende Kraft nicht nur in radiale Richtung, wie in FIG 1 eingezeichnet wirken kann sondern auch in tangentiale Richtung, d.h. in Richtung der Drehbewegung der Rotorwelle 1. Der Sensor 5 kann auch so ausgebildet sein, dass er die in Richtung der Drehbewegung der Rotorwelle 1 wirkende Kraft misst. Innerhalb der Steuerung 7 kann z.B. eine von der physikalischen Größe abgeleitete Größe ermittelt werden und diese dann mit einer Sollgröße verglichen werden, wobei falls die Abweichung der von der physikalischen Größe abgeleiteten Größe von der Sollgröße einen Grenzwert überschreitet eine Warnmeldung erzeugt wird. Die von der physikalischen Größe abgeleitete Größe kann z.B. in Form des Drehmoments vorliegen, das aus der in Richtung der Drehbewegung der Rotorwelle 1 wirkenden Kraft und dem Abstand des Sensors zur Rotationsachse R durch Multiplikation der beiden Größen ermittelt wird. Die Sollgröße liegt in diesem Fall entsprechend in Form eines Drehmoments vor. Entsprechend können auch von anderen physikalischen Größen (z.B. Temperatur, Schwingungen) Größen angeleitet werden und zur Auswertung mit einer entsprechenden Sollgröße verglichen werden. Weiterhin kann z.B. aus dem gemessenen Abstand d zwischen Außenring 3 und Innenring 2 die Kraft F abgeleitet werden.

Weiterhin sei an dieser Stelle angemerkt, dass selbstverständlich die Maschine auch mehrere Sensoren zur Messung von unterschiedlichen physikalischen Größen aufweisen kann. So kann z.B. die Maschine auch gleichzeitig einen Sensor, der die Temperatur des Fanglagers und/oder einen Sensor der die zwischen Außenring und dem Fanglagerträger auftretende Kraft und/oder einen Sensor, der die Schwingungen des Fanglagers und/oder einen Sensor der den zwischen Außenring und dem Fanglagerträger auftretenden Druck und/oder einen Sensor der den Abstand zwischen Außenring und Innenring misst, aufweisen. Der jeweilige Sensor kann dabei entsprechend dem Sensor 5, z.B. an der dem Fanglagerträger zugewandten Seite des Außenrings angeordnet sein und insbesondere zumindest zum Teil oder vollständig in der Aussparung 13 des Außenrings 3 und/oder zwischen Außenring und Fanglagerträger und/oder zumindest zum Teil im Inneren des Außenrings 3, anordnet sein. Die gemessenen physikalischen Größen werden dabei vorzugsweise parallel ausgewertet, wobei jede gemessene physikalische Größe, z.B. wie in FIG 5 und der zugehörigen Beschreibung beschrieben, ausgewertet wird.

Das erfindungsgemäße Verfahren ermöglicht eine vorausschauende Instandhaltung. Weiterhin kann durch das erfindungsgemäße Verfahren das Fanglager auch aus der Ferne von Wartungspersonal überwacht werden, ohne dass hierzu Wartungspersonal vor Ort an die Maschine gehen muss.

## Patentansprüche

1. Verfahren zur Überwachung des Zustands eines Fanglagers (14) einer Maschine (12), wobei vom Fanglager (14) eine Rotorwelle (1) der Maschine (12) bei Ausfall eines Magnetlagers (6) der Maschine (12) aufgefangen wird, wobei das Fanglager (14) einen Außenring (3) und ein gegenüber dem Außenring (3) rotierbar angeordneten Innenring (2) aufweist, wobei zur Überwachung des Zustands des Fanglagers (14) das Magnetlager (6) ausgeschaltet wird, die Rotorwelle (1) mit einem definierten Bewegungsablauf rotierend bewegt wird, die Rotorwelle (1) hierzu entsprechend von der Maschine (12) angetrieben wird, was von einer übergeordneten Steuerung (23) gesteuert wird, und mittels eines Sensors (5) eine physikalische Größe (G) des Fanglagers (14) gemessen wird.

2. Verfahren nach Anspruch 1, **dadurch gekennzeichnet, dass** die physikalische Größe (G) oder eine von der physikalischen Größe abgeleitete Größe mit einer Sollgröße verglichen wird und falls die Abweichung der physikalischen Größe (G) oder der abgeleiteten Größe von der Sollgröße einen Grenzwert überschreitet eine Warnmeldung erzeugt wird.

3. Verfahren nach einem der vorhergehen Ansprüche, **dadurch gekennzeichnet, dass** zum Befestigen des Fanglagers (14) in der Maschine (12) um den Außenring (3) ein Fanglagerträger (4) angeordnet ist, wobei der Sensor (5) an der dem Fanglagerträger (4) zugewandten Seite des Außenrings (3) angeordnet ist.

4. Verfahren nach einem der vorhergehen Ansprüche, **dadurch gekennzeichnet, dass** die physikalische Größe (G) in Form der Temperatur des Fanglagers (14) oder in Form einer zwischen Außenring (3) und dem Fanglagerträger (4) auftretenden Kraft (F) oder in Form von Schwingungen des Fanglagers (14) oder in Form eines zwischen Außenring (3) und dem Fanglagerträger (4) auftretenden Drucks vorliegt.

5. Verfahren nach einem der vorhergehen Ansprüche, **dadurch gekennzeichnet, dass** der Sensor (5) zwischen Außenring (3) und Fanglagerträger (4) angeordnet ist.

6. Verfahren nach einem der vorhergehen Ansprüche, **dadurch gekennzeichnet, dass** der Sensor (5) flach ausgebildet und in eine Folie (29) eingebettet oder auf einer Folie (29) angeordnet ist.

7. Verfahren nach einem der vorhergehen Ansprüche, **dadurch gekennzeichnet, dass** zum Befestigen des Fanglagers (14) in der Maschine (12) um den Außenring (3) ein Fanglagerträger (4) angeordnet ist, wobei der Außenring (3) an seiner dem Fanglagerträger (4) zugewanden Seite eine Aussparung (13) aufweist in der zumindest ein Teil des Sensors (5) angeordnet ist.

8. Verfahren nach Anspruch 1 oder 2, **dadurch gekennzeichnet, dass** die physikalische Größe (G) in Form des Abstands (d) zwischen Außenring (3) und Innenring (2) vorliegt.

9. Verfahren nach Anspruch 8, **dadurch gekennzeichnet, dass** zumindest ein Teil des Sensors (5) im Inneren des Außenrings (3) angeordnet ist.

10. Verfahren nach einem der vorhergehen Ansprüche, **dadurch gekennzeichnet, dass** zwischen Außenring (3) und Innenring (2) Wälzkörper (27) angeordnet sind oder dass der Innenring (2) direkt im Außenring (3) gleitet.

11. Verfahren nach einem der vorhergehen Ansprüche, **dadurch gekennzeichnet, dass** die physikalische Größe (G) über eine Datenverbindung (10,19,20) an einen von der Maschine (12) entfernt angeordneten Rechner (11) übertragen wird.

12. Verfahren nach einem der vorhergehen Ansprüche, **dadurch gekennzeichnet, dass** die Maschine (12) als Elektromotor oder Generator oder Kompressor oder Verdichter oder als Turbine ausgebildet ist.

13. Verfahren nach Anspruch 12, **dadurch gekennzeichnet, dass** die Maschine (12) als Windkraftgenerator ausgebildet ist.

14. Maschine, wobei die Maschine (12) ein Magnetlager (6) und ein Fanglager (14) aufweist, wobei das Fanglager (14) eine Rotorwelle (1) der Maschine (12) bei Ausfall des Magnetlagers (6) auffängt, wobei das Fanglager (14) einen Außenring (3) und ein gegenüber dem Außenring (3) rotierbar angeordneten Innenring (2) aufweist, wobei zur Überwachung des Zustands des Fanglagers (14) das Magnetlager (6) ausschaltbar ist, die Rotorwelle (1) bei ausgeschaltetem Magnetlager (6) mit einem definierten Bewegungsablauf rotierend bewegbar ist, die Rotorwelle (1) hierzu entsprechend von der Maschine (12) antreibbar ist, was von einer übergeordneten Steuerung (23) steuerbar ist, die Maschine einen Sensor (5) aufweist, von dem eine physikalische Größe (G) des Fanglagers (14) messbar ist.

15. Maschine nach Anspruch 14, **dadurch gekennzeichnet, dass** die physikalische Größe (G) mit einer Sollgröße oder mit einer von der physikalischen Größe (G) abgeleiteten Größe vergleichbar ist und falls die Abweichung der physikalischen Größe (G) oder der abgeleiteten Größe von der Sollgröße einen Grenzwert überschreitet eine Warnmeldung erzeugbar ist.

## Claims

1. Method for monitoring the state of a safety bearing (14) of a machine (12), wherein the safety bearing (14) catches a rotor shaft (1) of the machine (12) on failure of a magnetic bearing (6) of the machine (12), wherein the safety bearing (14) has an outer ring (3) and an inner ring (2) arranged rotatably in relation to the outer ring (3), wherein to monitor the state of the safety bearing (14) the magnetic bearing (6) is switched off, the rotor shaft (1) is moved rotationally with a defined course of movement, the rotor shaft (1) is driven accordingly by the machine (12), which can be controlled by an upstream controller (23), for this purpose and a physical variable (G) of the safety bearing (14) is measured by means of a sensor (5).

2. Method according to claim 1, **characterised in that** the physical variable (G) or a variable derived from the physical variable is compared with a target variable and, if the deviation of the physical variable (G) or the derived variable exceeds a threshold value, a warning message is generated.

3. Method according to one of the preceding claims, **characterised in that**, for attaching the safety bearing (14) in the machine (12), a safety bearing carrier (4) is arranged around the outer ring (3), with the sensor (5) arranged on the side of the outer ring (3) facing towards the safety bearing carrier (4).

4. Method according to one of the preceding claims, **characterised in that** the physical variable (G) is present in the form of the temperature of the safety bearing (14) or in the form of a force (F) occurring between outer ring (3) and the safety bearing carrier (4) or in the form of oscillations of the safety bearing (14) or in the form of a pressure occurring between outer ring (3) and the safety bearing carrier (4).

5. Method according to one of the preceding claims, **characterised in that** the sensor (5) is arranged between outer ring (3) and safety bearing carrier (4).

6. Method according to one of the preceding claims, **characterised in that** the sensor (5) is embodied flat and is embedded in a film (29) or is arranged on a film (29).

7. Method according to one of the preceding claims, **characterised in that**, for attaching the safety bearing (14) in the machine (12), a safety bearing carrier (4) is arranged around the outer ring (3), with the outer ring (3) having a recess (13) on its side facing towards the safety bearing carrier (4) in which at least a part of the sensor (5) is arranged.

8. Method according to claim 1 or 2, **characterised in that** the physical variable (G) is present in the form of the distance (d) between outer ring (3) and inner ring (2).

9. Method according to claim 8, **characterised in that** at least one part of the sensor (5) is arranged inside the inner ring (3).

10. Method according to one of the preceding claims, **characterised in that** roller bearings (27) are arranged between the outer ring (3) and inner ring (2) or that the inner ring (2) slides directly in the outer ring (3).

11. Method according to one of the preceding claims, **characterised in that** the physical variable (G) is transmitted via a data link (10, 19, 20) to a computer (11) arranged remote from the machine (12).

12. Method according to one of the preceding claims, **characterised in that** the machine (12) is embodied as an electric motor or generator or compressor or as a turbine.

13. Method according to claim 12, **characterised in that** the machine (12) is embodied as a wind power generator.

14. Machine, wherein the machine (12) has a magnetic bearing (6) and a safety bearing (14), wherein the safety bearing (14) catches a rotor shaft (1) of the machine (12) on failure of the magnetic bearing (6), wherein the safety bearing (14) has an outer ring (3) and an inner ring (2) arranged rotatably in relation to the outer ring (3), wherein to monitor the state of the safety bearing (14) the magnetic bearing (6) can be switched off, the rotor shaft (1), when the magnetic bearing (6) is switched off, is moved rotationally with a defined course of movement, the rotor shaft (1) can be driven accordingly by the machine (12), which can be controlled by an upstream controller (23), for this purpose and the machine has a sensor (5) by which a physical variable (G) of the safety bearing (14) is able to be measured.

15. Machine according to claim 14, **characterised in that** the physical variable (G) is able to be compared with the target variable or with a variable derived from the physical variable (G) and if the deviation of the physical variable (G) or the derived variable from the target variable exceeds a threshold value, a warning message is able to be generated.

## Revendications

1. Procédé de contrôle de l'état d'un palier (14) de secours d'une machine (12), dans lequel, si un palier (6) magnétique de la machine (12) est défaillant, on prend un arbre (1) de rotor par le palier (14) de secours, le palier (14) de secours ayant une bague (3) extérieure et une bague (2) intérieure montée tournante par rapport à la bague (3) extérieure, dans lequel, pour contrôler l'état du palier (14) de secours, on met hors circuit le palier (6) magnétique, on met en rotation l'arbre (1) du rotor à un déroulement de mouvement défini, on entraîne l'arbre (1) du rotor à cet effet d'une manière adéquate par la machine (12), ce qui est commandé par une commande (23) supérieure hiérarchiquement, et on mesure à l'aide d'un capteur (5) une grandeur (G) physique du palier (14) de secours.

2. Procédé suivant la revendication 1, **caractérisé en ce que** l'on compare la grandeur (G) physique ou une grandeur déduite de la grandeur physique à une grandeur de consigne et, si l'écart de la grandeur (G) physique ou de la grandeur déduite à la grandeur de consigne dépasse une valeur limite, il est produit une alerte.

3. Procédé suivant l'une des revendications précédentes, **caractérisé en ce qu'**un porte-palier de secours (4) est monté autour de la bague (3) extérieure pour fixer le palier (14) de secours dans la machine (12), le capteur (5) étant monté du côté de la bague (3) extérieure, tourné vers le porte-palier de secours (4).

4. Procédé suivant l'une des revendications précédentes, **caractérisé en ce que** la grandeur (G) physique se présente sous la forme de la température du palier (14) de secours, sous la forme d'une force (F) se produisant entre la bague (3) extérieure et le porte-palier de secours (4), sous la forme de vibrations du palier (14) de secours ou sous la forme d'une pression se produisant entre la bague (3) extérieure et le porte-palier de secours (4).

5. Procédé suivant l'une des revendications précédentes, **caractérisé en ce que** le capteur (5) est monté entre la bague (3) extérieure et le porte-palier de secours (4).

6. Procédé suivant l'une des revendications précédentes, **caractérisé en ce que** le capteur (5) est constitué de manière plate et est incorporé dans une feuille (29) où est mis sur une feuille (29).

7. Procédé suivant l'une des revendications précédentes, **caractérisé en ce qu'**un porte-palier de secours (4) est monté autour de la bague (3) extérieure pour fixer le palier (14) de secours dans la machine (12), la bague (3) extérieure ayant, sur son côté tourné vers le porte-palier de secours (4), un évidement (13) dans lequel est disposée au moins une partie du capteur (5).

8. Procédé suivant la revendication 1 ou 2, **caractérisé en ce que** la grandeur (G) physique se présente sous la forme de la distance (d) entre la bague (3) extérieure et la bague (2) intérieure.

9. Procédé suivant la revendication 8, **caractérisé en ce qu'**au moins une partie du capteur (5) est disposée à l'intérieur de la bague (3) extérieure.

10. Procédé suivant l'une des revendications précédentes, **caractérisé en ce que** des corps (27) de roulement sont disposés entre la bague (3) extérieure et la bague (2) intérieure ou **en ce que** la bague (2) intérieure glisse directement dans la bague (3) extérieure.

11. Procédé suivant l'une des revendications précédentes, **caractérisé en ce que** l'on transmet la grandeur (G) physique par une liaison (10, 19, 20) de données à un ordinateur (11) éloigné de la machine (12).

12. Procédé suivant l'une des revendications précédentes, **caractérisé en ce que** la machine (12) est sous la forme d'un moteur électrique ou d'une génératrice ou d'un compresseur ou d'un condenseur ou d'une turbine.

13. Procédé suivant la revendication 12, **caractérisé en ce que** la machine (12) est sous la forme d'une éolienne.

14. Machine, la machine (12) ayant un palier (6) magnétique et un palier (14) de secours, le palier (14) de secours prenant un arbre (1) du rotor de la machine (12) si le palier (6) magnétique est défaillant, le palier (14) de secours ayant une bague (3) extérieure et une bague (2) intérieure montée tournante par rapport à la bague (3) extérieure, dans laquelle, pour contrôler l'état du palier (14) de secours, le palier (6) magnétique peut être mis hors circuit, l'arbre (1) du rotor peut, alors que le palier (6) magnétique est mis hors circuit, être mis en rotation à un déroulement du mouvement défini, l'arbre (1) du rotor pouvant être entraîné à cet effet d'une manière adéquate par la machine (12), ce qui peut être commandé par une commande (23) supérieure hiérarchiquement, la machine a un capteur (5) par lequel une grandeur (G) physique du palier (14) de secours peut être mesurée.

15. Machine suivant la revendication 14, **caractérisée en ce que** la grandeur (G) physique peut être comparée à une grandeur de consigne ou à une grandeur déduite de la grandeur (G) physique et, si l'écart de la grandeur (G) physique ou de la grandeur déduite à la grandeur de consigne dépasse une valeur limite, une alerte peut être produite.
